# EUROPÄISCHE PATENTANMELDUNG

(11) **EP 0 593 408 A1**
(43) Veröffentlichungstag der Anmeldung: **20.04.1994**
(21) Anmeldenummer: 93890166.7
(22) Anmeldetag: 31.08.1993
(51) Int. Cl.: B21B 27/00

(54) **Verbundwalze**

(30) Priorität: 11.09.1992 AT 1823/92
(71) Anmelder: BÖHLER Edelstahl GmbH, A-8605 Kapfenberg (AT)
(72) Erfinder: Illmaier, Herbert, A-8605 Kapfenberg (AT); Findenigg, Hugo, A-8605 Kapfenberg (AT)
(74) Vertreter: Brauneiss, Leo, Dipl.Ing.

(57) **Zusammenfassung**

Die Erfindung bezieht sich auf eine Verbundwalze, insbesondere mit im wesentlichen zylindrischer Arbeitsfläche sowie auf ein Verfahren zur Herstellung von Verbundwalzen.

Erfindungsgemäß ist vorgesehen, daß der einen Innenteil umgebende Mantelteil aus einer Eisenbasislegierung gebildet ist, die eine Konzentration von 1,8 bis 5,5 Gew.-% Monokarbid bildenden Elementen bei einem Kohlenstoffgehalt von 0,8 bis 2,0 Gew.-% aufweist, sowie im wesentlichen die Legierungselemente Chrom, Molybdän und/oder Wolfram , gegebenenfalls Kobalt und Aluminium, enthält und im für den Einsatz erstellten Zustand einen Karbidanteil von mindestens 5,5 Vol.-% bei einer Karbidkorngröße von 10 bis 20 um und einer Materialhärte von 54 bis 64 HRC eine Materialzähigkeit von mindstens 22 J gemessen als Bruchbiegearbeit an abgeflachten Rundproben ( 7,0/10,0) besitzt. Ein erfindungsgemäßes Verfahren zur Herstellung einer Verbundwalze ist gekennzeichnet durch eine Herstellung des Arbeits- oder Mantelteiles und eine Aufbringen auf den Kernteil mittels eines Schrumpfverbundes.

## Beschreibung

Die Erfindung betrifft eine Verbundwalze, insbesondere mit im wesentlichen zylindrischer Arbeitsfläche, zum Walzen von Stählen und Legierungen, insbesondere von Walzgut mit quadratischem, rechteckigem oder polygonalem Querschnitt, z.B. Flachstahl, vorzugsweise bei erhöhter Temperatur, bestehend aus einem Zapfen oder Bereiche zur Lagerung der Walze aufweisenden Kern- oder Innenteil und zumindest einem mit diesem, insbesondere reibungsschlüssig, verbundenen äußeren Arbeits- oder Mantelteil. Weiters befaßt sich die Erfindung mit einem Verfahren zur Herstellung einer Verbundwalze der eingangs genannten Art.

Durch den Widerstand, den ein Werkstoff seiner Verformung entgegensetzt, entsteht beim Walzumformen eine Biegebeanspruchung der Walzen und somit eine Bildung von Zug- bzw. Druckspannungen in der oberflächennahen bzw. arbeitsflächennahen Zone derselben. Örtlich erfolgt bei einer Walzenumdrehung ein Wechsel von Zug- und Druckbelastung des Materials, eine Walze muß somit eine ausreichend hohe Biegewechselfestigkeit aufweisen. Weiters ist die Arbeitsfläche der Walze auf Verschleiß beansprucht, weil bei einer Querschnittsabnahme im Walzspalt zwischen Walze und Walzgut zumindest teilweise eine Relativbewegung und senkrecht zur Verformung gerichtete Kräfte gebildet werden. Als Walzenwerkstoffe werden daher möglichst verschleißfeste Materialien gewählt, wobei jedoch unter anderem deren Sprödigkeit, Rißbildungsneigung und deren Kosten zusätzlich wichtige Faktoren darstellen, die zu berücksichtigen sind. Besonders große Verschleißbeanspruchungen liegen beim Warmwalzen von insbesondere kleinen Abmessungen vor, wenn das Walzgut oder Teile desselben, z.B. die Kanten, teilweise abgekühlt sind und ein dadurch vergrößerter Umformwiderstand des Materials in diesen Bereichen vorliegt. Beim Walzen von Flachstahl bzw. Flachprofil, insbesondere mit gleichem Stichplan oder Stichplanteil, und beim Einsatz von Walzmaterial mit hohem Umformwiderstand, z.B. einige hochlegierte Stähle oder Nichteisenlegierungen, können die Walzenoberflächen gegebenenfalls schon nach geringer Betriebszeit nicht weiter zulässige umfängliche Abtragungen aufweisen; es liegt ein sogenanntes örtliches Einlaufen der Walzenoberfläche vor. Eine Beseitigung dieser Vertiefungen erfolgt durch ein Abschleifen der Walzenmantelfläche, wobei eine verringerte Walzenleistung, ein Aus- und Einbau der Walzen sowie die damit verbundenen Stillstandszeiten der Verformungseinrichtung wirtschaftliche Nachteile darstellen.

Zur Verkleinerung der erforderlichen Abtragungen von der Walzenoberfläche je Gewichtseinheit verformtes Walzgut werden, wie eingangs festgestellt, möglichst verschleißfeste Legierungen als Walzenwerkstoff verwendet. Einer Erhöhung der Verschleiß - festigkeit des Werkstoffes durch legierungstechnische Maßnahmen sind jedoch Grenzen gesetzt, weil eine steigende Härte und Abriebfestigkeit des Materials mit einer Verringerung von dessen Zähigkeit bzw. mit einer Vergrößerung der Sprödigkeit und Bruchgefahr verbunden sind.

Es ist bekannt, zur Erfüllung der Erfordernisse betreffend die Verschleißfestigkeit und die Zähigkeit gegossene Verbundwalzen mit einem zähen, tragenden Kern und einer hochverschleißfesten Arbeitsschicht herzustellen und einzusetzen. Dabei ist es allerdings nötig, bei der Fertigung besondere Gußverfahren anzuwenden, welche zumeist einen großen Aufwand erfordern. Überdies sind gegossene Walzen weniger bruchsicher als geschmiedete. Weiters wurde schon versucht, eine Verschleißschicht durch Schweißen auf den Walzenkörper im Arbeitsbereich derselben aufzubringen oder eine ausgelaufene Walze derartig zu reparieren. Diese Vorgangsweise ist für ein Aufpanzern mit einer dünnen Arbeitsschicht durchaus möglich, jedoch auf Grund der Ausbildung einer wärmebeeinflußten Zone im Bereich des Schweißgutes und einen durch eine beim Schweißen erfolgende Wärmeeinbringung gegebenenfalls verursachten Verzug der Walze nur im beschränkten Maße einsetzbar.

Die Erfindung setzt sich zum Ziel, eine Verbundwalze zu schaffen, welche einen zähfesten Kern- oder Innenteil und einen aus hochlegiertem, hartem und verschleißfestem Werkstoff gebildeten Arbeits- oder Mantelteil aufweist und verbesserte Gebrauchseigenschaften besitzt. Weiters ist es Aufgabe der Erfindung, ein Verfahren zur Herstllung von Walzen anzugeben, welches für eine Fertigung mit Aufbringen und für eine Reparatur durch Tausch eines Arbeits- oder Mantelteiles vorteilhaft anwendbar ist.

Erstgenanntes Ziel wird erfindungsgemäß dadurch erreicht, daß der den Innenteil umgebende Arbeits- oder Mantelteil aus einem Eisenbasis- Werkstoff mit einem Anteil an Legierungselementen von mindestens 10 Gew.-% gebildet ist, welcher mit einer Konzentration in Gew.-% von 1,8 bis 5,5, vorzugsweise 1,9 bis 3,5, mindestens ein Monokarbid bildendes Element wie Vanadin, Niob, Tantal, Titan, Zirkon, Hafnium bei einem Gehalt von 0,8 bis 2,9, vorzugsweise 0,86 bis 1,3, Gew.--% Kohlenstoff aufweist, sowie im wesentlichen die Legierungselemente Chrom, Molybdän und/oder Wolfram, gegebenenfalls Kobalt und Aluminium enthält und im durch eine Wärmebehandlung für den Einsatz erstellten Zustand einen Karbidanteil von mindestens 5,5, vorzugsweise von mindestens 6,5, Vol.-% bei einer Karbidkorngröße im wesentlichen von 10 bis 20 um, vorzugsweise von 12 bis 20 um, und ein durch bei niedriger Temperatur gehärtetes und/oder bei hoher Temperatur angelassenes zähes Matrixgefüge aufweist und eine Materialhärte von 54 bis 64 HRC, vorzugsweise von 58 bis 60 HRC, und Werte für die Materialzähigkeit bei Raumtemperatur von mindestens 2 J, vorzugsweise von größer als 30 J, gemessen als Bruchbiegearbeit an auf 7,0 + 0,05 mm abgeflachten Rundproben mit einem Durchmesser von 10,0 + 0,05 mm aufweist.

Die durch die Erfindung erreichten Vorteile sind im wesentlichen darin zu sehen, daß für eine Umformung bzw. eine Ausführung der Verformung am Walzgut ein über den gesamten Querschnitt gehärteter bzw. harter Arbeitsteil aus Werkzeugstahl, insbesondere Schnellarbeitsstahl mit einem hohen Anteil an harten und im Vergleich mit anderen Werkzeugen groben Monokarbiden, welche in dieser Form besonders die Verschleißfestigkeit des Werkstoffes wesentlich erhöhen, in einer zähen und hochfesten Matrix vorliegen und die bei der Walzung auftretenden Biegewechselspannungen durch den zähfesten Kern oder Innenteil aufgenommen werden. Dabei ist es wichtig, daß, durch eine Wärmebehandlung des Arbeitsteiles erreicht, dieser über den gesamten Querschnitt eine gewünschte Materialhärte bei hohen Werten für die Materialzähigkeit aufweist, um eine Neigung zu einem muscheligen Ausbrechen von Teilen aus der Walzenoberfläche, ein sog. Spalling, zu vermeiden.

Die Gebrauchseigenschaften des Arbeitsteiles können noch weiter vorteilhaft gefördert werden, wenn der Werkstoff des Mantelteiles im Gew.-% 3,5 bis 6,0, vorzugsweise 4,0 bis 4,5, Chrom und 4,0 bis 16,0, vorzugsweise 5 bis 9, Molybdän plus Wolfram mit einem Wert für den Wolframgehalt, der der Hälfte der Wolframkonzentration entspricht, enthält.

Wenn, wie gemäß einer weiteren bevorzugten Form bei einem Gesamtdurchmesser der Walze von größer als 180 mm, vorzugsweise von größer als 200 mm, insbesondere von größer als 250 mm, deren Kern- oder Innenteildurchmesser mindestens 80 mm, vorzugsweise mehr als 100 mm, beträgt und der Arbeits- oder Mantelteil eine Wandstärke von höchstens 100 mm, vorzugsweise von kleiner als 80 mm, insbesondere ca 60 mm, aufweist, werden nicht nur gute mechanische Bedingungen für hohe Walzkräfte und für stoßweise Belastungen geschaffen, sondern es ist auch eine besondere Wirtschaftlichkeit der Herstellung durch einen geringeren Anteil an teurem hochlegierten Stahl gegeben Fertigungstechnisch jedoch auch hinsichtlich einer Reparatur bzw. Instandsetzung kann es weiters günstig sein, wenn der Kern- oder Innenteil und der Arbeits- oder Mantelteil mittels Schrumpfung miteinander verbunden sind. Weil bei Walzen für eine Warmumformung des Walzgutes auch die walzenoberflächennahe Zone eine Erwärmung und dadurch eine Ausdehnung erfährt, war es für den Fachmann vollkommen überraschend, daß unter üblichen Warmwalzbedingungen keine Lockerung des erfindungsgemäßen Schrumpfsitzes eintritt und ein ausreichender Reibungsschluß zur Übertragung großer Walzmomente erreichbar ist.

Die weitere Aufgabe der Erfindung wird dadurch gelöst, daß der Werkstoff des Arbeits- oder Mantelteiles bei dessen Herstellung einer mindestens 4-fachen Warmverformung unterworfen und nach einer mechanischen Bearbeitung derart wärmebehandelt wird, daß eine Karbidkorngröße im wesentlichen von 10 bis 20 um, vorzugsweise 12 bis 20 um, eine Materialhärte von 54 bis 63 HRC, vorzugsweise von 58 bis 60 HRC, und eine Materialzähigkeit von mindestens 22 J, vorzugsweise von größer als 30 J, gemessen als Bruchbiegearbeit an auf 7,0 + 0,05 mm abgeflachten Rundproben mit einem Durchmesser von 10,0 + 0,05 mm gebildet bzw. bewirkt werden, wonach der Arbeits- oder Mantelteil auf eine Temperatur bis zur Anlaßtemperatur, insbesondere auf Auflaßtemperatur der Legierung, erwärmt, auf den Kern- oder Innenteil aufgeschoben und zur Erstellung eines Schrumpfverbundes abkühlen gelassen wird. Sowohl für einen Erhalt von gewünschten Werkstoffeigenschaften als auch für eine einfache und sichere Herstellung der Walze ist diese Vorgangsweise von besonderem Vorteil. Auch ausgelaufene, also durch oftmaliges Abschleifen einen für die weitere Bearbeitung und für einen Wiedereinsatz zu dünnen Arbeits- oder Mantelteil aufweisende Walzen können in einfacher Weise wieder instandgesetzt werden, wenn der verschlissene Mantel beispielsweise nach einer Schnellerwärmung oder nach einem Aufschneiden desselben vom Kern- oder Innenteil abgezogen und ein neuer Arbeitsteil aufgeschrumpft wird. Dabei bleiben die Zapfen oder Bereiche der zur Lagerung der Walze fluchtend bzw. unverwändert in deren geometrischer Ausrichtung erhalten, wodurch ein gegebenenfalls oftmaliger Wiedereinsatz des Kern- oder Innenteiles bei einer Herstellung von erfindungsgemäßen Walzen und eine besondere Wirtschaftlichkeit des Betriebes einer damit ausgerüsteten Strecke gegeben sind.

Im folgenden wird die Erfindung anhand von lediglich Ausführungswege darstellenden Beispielen näher erläutert. In einer Hochleistungswalzeinrichtung für Edelstähle wurden zum Walzen von Flachstäben mit einer Höhe von 12 mm und einer Breite von 140 mm Hartgußwalzen eingesetzt, die einen Ballendurchmesser von 445 mm und eine Ballenbreite von 250 mm aufwiesen. Im kontinuierlichen Warmbetrieb entstanden in den Walzenoberflächen der Walzenpaare im Bereich, in welchem bei der Flachstabwalzung die Kanten des Walzgutes geformt werden, vergrößerte Abtragungen bzw. rillenförmige Vertiefungen. Zum Zeitpunkt, bei welchem jeweils das Ausmaß der Vertiefungen bzw. des Einlaufes der Kanten einen Wert von ca. 0,25 mm überstieg, war die Produktgüte, insbesondere die Maßhaltigkeit nicht mehr gegeben und Walzen der Walzeinrichtung wurden ausgebaut und deren Arbeitsflächen abgeschliffen. Nach 39 derartigen Walzenbearbeitungen waren deren Ballenaußendurchmesser auf einen Wert von 410 mm Durchmesser verringert und die Grenzen der Anstellmöglichkeiten im Gerüst erreicht.

Anstatt einer Verschrottung zuzuführen wurden Walzen auf einen Außendurchmesser von 340 mm abgearbeitet und als Kern oder Inneneile von Verbundwalzen verwendet. Der durch Schrumpfung aufgebrachte Mantelteil wies dabei eine derartige Wandstärke auf, daß das Ballenmaß einer Neuwalze mit einem Durchmesser von 445 mm erreicht wurde. Bei der Herstellung der Arbeits- oder Mantelteile wurde ein Vormaterial einer Legierung gemäß DIN- Werkstoff Nr. 1.3343 eingesetzt und ein Rohrschmiedeverfahren mit einem 5,7-fachen Umformgrad angewendet. Im Zuge der Wärmebehandlung der Teile erfolgten im wesentlichen eine Karbidkornglühung, ein Austenitisieren bei einer Temperatur von ca. 1200 C, ein Ablöschen im Warmbad und ein zweimaliges Anlassen im Temperaturbereich von 550 bis 575 C, wonach diese wiederum auf eine Temperatur von 520 C erhitzt und auf die vorliegenden Innenteile aufgeschrumpft wurden. Mit einer am Mantelteil gemessenen Härte von 60 bis 60,5 HRC wurden die Walzen eingesetzt, wobei eine um den Faktor 3,86 bis 4,32 erhöhte Standzeit bzw. Walzdurchsatzmenge erreicht werden konnte. Nach dem Ausscheiden der Walzen erfolgte eine metallographische und mechanische Untersuchung des Mantelwerkstoffes. Dabei wurde ein Karbidanteil im Werkstoff von 9,2 bis 8,6 Vol.-% ermittelt, wobei die Karbidkorngröße durchschnittlich 16 bis 18 um betrug. Eine Prüfung der Materialzähigkeit gemessen als Bruchbiegearbeit an abgeflachten Rundproben ( 7,0/10,0) erbrachte Werte zwischen 31 und 24 J.

Für ein Hochleistungsmehrlinienwalzwerk wurden für den am stärksten beanspruchten Teil erfindungsgemäße Verbundwalzen mit einem Ballendurchmesser von 510 mm Durchmesser und einer Ballenbreite von 305 mm gefertigt. Der Durchmesser des Kernteiles aus Vergütungsstahl betrug 390 mm. Als Werkstoff für den Arbeitsteil wurde eine Legierung ähnlich einer durch DIN- Werkstoff Nr. 1.3207 gekennzeichneten bzw. einer mit zusätzlich 2,3 Gew.-% Niob, 0,3 Gew.-% Zirkon, 0,8 Gew.-% Aluminium und einem Kohlenstoffgehalt von 1,04 Gew.-% aufweisenden verwendet. Die Materialuntersuchungen des Mantelteiles nach einer Wärme- und Vergütungsbehandlung erbrachten folgende Ergebnisse: Karbidanteil 8,7 Vol.-%, Karbidkorngröße 13,9 bis 19,2 um, überwiegend jedoch etwa 18,0 um, Materialhärte ca. 60 HRC, Materialzähigkeit 29,5 bis 30,66 J gemessen als Bruchbiegearbeit an abgeflachten Rundproben ( 7,0/10,0). Die Walzenleistung der sich noch im Einsatz befindlichen Walzen wurde aus den laufenden Ergebnissen hochgerechnet und wird mindestens 8,5mal höher sein als die einer Gußwalze.

## Patentansprüche

1. Verbundwalze, insbesondere mit im wesentlichen zylindrischer Arbeitsfläche, zum Walzen von Stählen und Legierungen, insbesondere von Walzgut mit quadratischem, rechteckigem oder polygonalem Querschnitt, z.B. Flachstahl, vorzugweise bei erhöhter Temperatur, bestehend aus einem Zapfen oder Bereiche zur Lagerung der Walze aufweisenden Kern- oder Innenteil und zumindest einem mit diesem, insbesondere reibungsschlüssig, verbundenen äußeren Arbeits- oder Mantelteil, dadurch gekennzeichnet, daß der den Innenteil umgebende Arbeits- oder Mantelteil aus einem Eisenbasis-Werkstoff mit einem Anteil an Legierungselementen von mindestens 10 Gew.-% gebildet ist, welcher mit einer Konzentration in Gew.-% von 1,8 bis 5,5, vorzugsweise 1,9 bis 3,5, mindestens ein Monokarbid bildendes Element wie Vanadin, Niob, Tantal, Titan, Zirkon, Hafnium bei einem Gehalt von 0,8 bis 2,0, vorzugsweise 0,86 bis 1,3 Gew.-% Kohlenstoff aufweist, sowie im wesentlichen die Legierungselemente Chrom, Molybdän und/oder Wolfram, gegebenenfalls Kobalt und Aluminium, enthält und im durch eine Wärmebehandlung für den Einsatz erstellten Zustand einen Karbidanteil von mindestens 5,5 Vol.-%, vorzugsweise von mindestens 6,5, Vol.-% bei einer Karbidkorngröße im wesentlichen von 10 bis 20 um, vorzugsweise von 12 bis 20 um, und ein durch bei niedriger Temperatur gehärtetes und/oder bei hoher Temperatur angelassenes zähes Matrixgefüge aufweist und eine Materialhärte von 54 bis 63 HRC, vorzugweise von 58 bis 60 HRC, und Werte für die Materialzähigkeit bei Raumtemperatur von mindestens 22 J, vorzugsweise von größer als 30 J, gemessen als Bruchbiegearbeit an auf 7,0 + 0,05 mm abgeflachten Rundproben mit einem Durchmesser von 10,0 + 0,05 mm besitzt.

2. Verbundwalze nach Anspruch 1, dadurch gekennzeichnet, daß der Werkstoff des Mantelteiles in Gew.-% 3,5 bis 6,0, vorzugsweise 4,0 bis 4,5, Chrom und 4,0 bis 16,0, vorzugsweise 5 bis 9, Molybdän plus Wolfram mit einem Wert für den Wolframgehalt, der der Hälfte der Wolframkonzentration entspricht, enthält.

3. Verbundwalze nach Anspruch 1 oder 2, dadurch gekennzeichnet, daß bei einem Gesamtdurchmesser der Walze von größer als 180 mm, vorzugsweise von größer als 200 mm, insbesondere von größer als 250 mm, deren Kern- oder Innenteildurchmesser mindestens 80 mm, vorzugsweise mehr als 100 mm, beträgt und der Arbeits- oder Mantelteil eine Wandstärke von höchstens 100 mm, vorzugsweise von kleiner als 80 mm, insbesondere ca. 60 mm, aufweist.

4. Verbundwalze nach einem der Ansprüche 1 bis 3, dadurch gekennzeichnet, daß der Kern- oder Innenteil und der Arbeits- oder Mantelteil mittels Schrumpfung miteinander verbunden sind.

5. Verfahren zur Herstellung einer Verbundwalze, insbesondere mit im wesentlichen zylindrischer Arbeitsfläche, zum Walzen von Stählen und Legierungen, insbesondere von Walzgut mit quadratischem, rechteckigem oder polygonalem Querschnitt, z.B. Flachstahl, vorzugsweise bei erhöhter Temperatur, bestehend aus einen Zapfen oder Bereiche zur Lagerung der Walze aufweisenden Kern- oder Innenteil und zumindest einem mit diesem, insbesondere reibungsschlüssig, verbundenen äußeren Arbeits- oder Mantelteil, insbesondere nach einem der Ansprüche 1 bis 4, dadurch gekennzeichnet, daß der Werkstoff des Arbeits- oder Mantelteiles bei dessen Herstellung einer mindestens 4 - fachen Warmverformung unterworfen und nach einer machanischen Bearbeitung derart wärmebehandelt wird, daß eine Karbidkorngröße im wesentlichen von 10 bis 20 um, vorzugsweise von 12 bis 20 um, eine Materialhärte von 54 bis 64 HRC, vorzugsweise von von 58 bis 60 HRC, und eine Materiallzähigkeit von mindestens 22 J, vorzugsweise von größer als 30 J, gemessen als Bruchbiegearbeit an auf 7,0 + 0,05 mm abgeflachten Rundproben mit einem Durchmesser von 10,0 + 0,05 mm gebildet bzw. bewirkt werden, wonach der Arbeits- oder Mantelteil auf eine Temperatur bis zur Anlaßtemperatur, insbesondere auf Anlaßtemperatur der Legierung, erwärmt, auf den Kern- oder Innenteil aufgeschoben und zur Erstellung eines Schrumpfverbundes abkühlen gelassen wird.
